# EUROPÄISCHE PATENTSCHRIFT

(11) **EP 3 682 147 B1**
(45) Veröffentlichungstag und Bekanntmachung des Hinweises auf die Patenterteilung: **09.08.2023**
(21) Anmeldenummer: 18765069.2
(22) Anmeldetag: 30.08.2018
(51) Int. Cl.: F16K 5/06, F16J 15/10, F16J 15/16, F16J 15/3208

(54) **HYBRID-DICHTRING UND DICHTUNGSANORDNUNG MIT EINEM SOLCHEN HYBRID-DICHTRING**
HYBRID SEALING RING AND SEALING ARRANGEMENT HAVING SUCH A HYBRID SEALING RING
BAGUE D'ÉTANCHÉITÉ HYBRIDE ET ENSEMBLE D'ÉTANCHÉITÉ COMPRENANT UNE TELLE BAGUE D'ÉTANCHÉITÉ HYBRIDE

(30) Priorität: 14.09.2017 DE 102017216345
(43) Veröffentlichungstag der Anmeldung: 22.07.2020
(73) Patentinhaber: Volkswagen Aktiengesellschaft, 38440 Wolfsburg (DE)
(72) Erfinder: FRIES, Holger, 38640 Goslar (DE); LÜDERS, Ralf, 31224 Peine (DE); BILBAL, Ugur Goekhan, 31139 Hildesheim (DE); JÜSTEL, Steffen, 39606 Altmärkische Höhe (DE)
(86) Internationale Anmeldenummer: PCT/EP2018/073288
(87) Internationale Veröffentlichungsnummer: WO 2019/052812

(56) Entgegenhaltungen:
- CH-A5- 600 207
- DE-A1-102014 115 843
- DE-U- 7 016 069
- US-A- 4 053 166
- US-A1- 2003 030 235

## Beschreibung

Die Erfindung betrifft einen Hybrid-Dichtring und insbesondere einen Hybrid-Dichtring, welcher zwei Bauteile aufweist. Ebenfalls betrifft die Erfindung eine Dichtungsanordnung mit einem solchen Hybrid-Dichtring.

Herkömmliche Brennkraftmaschinen weisen regelmäßig einen oder mehrere Kühlmittelkreisläufe zur Kühlung auf, wobei das Kühlmittel bspw. durch einen ersten Kühlmittelweg mit einem Wärmetauscher oder durch einen zweiten Kühlmittelweg ohne Wärmetauscher geleitet werden kann. Zur Regelung der durch die verschiedenen Kühlmittelwege zu leitenden Kühlmittelmengen sind regelmäßig Ventilanordnungen, wie etwa Drehschieberventile, vorgesehen. Ventilanordnungen weisen ein verstellbares Ventilglied, wie etwa einen Drehschieber, auf, das in einer ersten Ventilstellung einen Durchgang zwischen einem Fluidzuführkanal und einem ersten Fluidableitkanal freigibt und in einer zweiten Ventilstellung einen Durchgang zwischen dem Fluidzuführkanal und einem zweiten Fluidableitkanal freigibt. Auch Zwischenstellungen des Ventilglieds sind möglich, bspw. um eine optimale Kühlmitteltemperatur einstellen zu können.

In den jeweiligen Ventilstellungen muss dafür gesorgt werden, dass das dem Ventilglied zugewandte Ende eines entsprechenden Fluidkanals dichtend an dem Ventilglied anliegt, so dass ein Vordringen des Kühlmittels zu nicht dafür vorgesehenen Bereichen der Ventilanordnung, wie etwa Bereichen mit elektrischen Bauteilen, verhindert wird. Damit kann eine Beschädigung der elektrischen Bauteile verhindert werden. Ferner soll in einer geschlossenen Ventilstellung kein Kühlmittel von dem Fluidkanal an dem Ventilglied vorbei weiter in die Ventilanordnung vordringen können. Zu diesem Zweck ist regelmäßig eine zwischen dem beweglichen Ventilglied und dem Ende des Fluidkanals wirkende Dichtungsanordnung vorgesehen. Eine solche Dichtungsanordnung ist beispielsweise in der WO 2016/030505 A1 dargestellt.

Die Dichtungsanordnung weist einen Dichtring zum Abdichten gegenüber dem Ventilglied auf. Kleinste Einfallstellen oder Erhebungen auf der Mantelfläche des Ventilglieds können eine kritische Leckage für das Kühlmittel verursachen. Deshalb wird das Material des Dichtrings so gewählt, dass der Dichtring Unebenheiten des Ventilglieds möglichst gut ausgleichen kann, so dass der Dichtring beim Gleiten über das drehbare Ventilglied optimal gegen das Ventilglied abdichtet. Dies wird mittels eines weichen und/oder elastischen Materials erreicht.

Ein weiches und/oder elastisches Material kann aber beim Drehen des Ventilglieds in die Öffnung des Ventilglieds eintauchen. Dadurch kann das Dichtelement beim Anstoßen gegen den Rand der Öffnung des Ventilglieds beschädigt werden.

Die DE 70 16 069 U offenbart einen Dichtring mit einem Stützring und mit einem Gleitring. Der Dichtring dient zum Abdichten gegenüber einem Radialflansch einer Schleuderscheibe.

Die DE 10 2014 115 843 A1 beschreibt eine Gleitringdichtung aufweisend einen Stützring und einen Dichtungsring. Die Gleitringdichtung dient zum Abdichten gegenüber einem rotierenden weiteren Dichtungsring.

Die CH 600 207 A5 offenbart eine Stangen- bzw. Zylinderdichtung, wobei ein Dichtring gegenüber einer Stange bzw. gegenüber einem Zylinder abdichtet. Der Dichtring weist ein Elastomerteil, einen Stützring und einen Gleitring auf.

Die US 4 053 166 A beschreibt einen Dichtring, welcher einen weichen Ring und einen härteren Ring aufweist. Der Dichtring wird dazu verwendet, um gegen ein Kolbenelement abzudichten.

Die US 2003/0030235 A1 offenbart einen Dichtring aus einem Elastomer und eine Halterung aus PTFE. Dabei wird der Dichtring von der Halterung gehalten. Weiter dient der Dichtring zum Abdichten gegenüber einem Ventilglied eines Ventils.

Der Erfindung liegt die Aufgabe zugrunde, einen verbesserten Dichtring bereitzustellen, welcher weniger leicht in die Öffnung des Ventilglieds einsackt. Weiter ist es eine Aufgabe der Erfindung eine verbesserte Dichtungsanordnung mit einem solchen Dichtring bereitzustellen.

Diese Aufgabe wird erfindungsgemäß durch einen Hybrid-Dichtring nach Anspruch 1 gelöst. Vorteilhafte Ausgestaltungen der Erfindung sind in weiteren Ansprüchen beschrieben. Die in den Ansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Dementsprechend wird ein Hybrid-Dichtring für eine Dichtungsanordnung bereitgestellt. Der Hybrid-Dichtring weist einen Stützring zum mechanischen Stabilisieren des Hybrid-Dichtrings, und einen Gleitring zum Gleiten auf einem Ventilglied auf. Dabei sind der Stützring und der Gleitring dichtend miteinander verbunden.

Dadurch, dass der Hybrid-Dichtring sowohl einen Stützring als auch einen Gleitring aufweist, kann gewährleistet werden, dass der Hybrid-Dichtring einerseits ausreichend weich und/oder elastisch ist, um Einfallstellen oder Erhebungen auf dem Mantel eines Ventilglieds auszugleichen, und andererseits ausreichend steif ist, um ein zu tiefes Eintauchen in die Öffnung des Ventilglieds zu verhindern.

Dies hat den Vorteil, dass eine bleibende Deformation des Hybrid-Dichtrings verhindert werden kann. Weiter kann der Hybrid-Dichtring, z.B. bei abgestelltem Motor, in einer Stellung verbleiben, in welcher er sich ganz oder teilweise über der Öffnung des Ventilglieds befindet. Zudem kann auf einen Steg und/oder Käfig verzichtet werden, welcher ein Einsacken in die Öffnung des Ventilglieds verhindern soll.

Der Stützring dient dazu dem Hybrid-Dichtring eine gewisse Stabilität zu verleihen. Dazu ist der Stützring ausreichen steif ausgebildet. Ein zu weites Einsacken des Hybrid-Dichtrings in die Öffnung des Ventilglieds wird dadurch verhindert.

Der Gleitring dient zum Gleiten auf dem Ventilglied und ist daher ausreichend weich und/oder elastisch ausgebildet, so dass Einfallstellen und Erhebungen der Mantelfläche des Ventilglieds ausgeglichen werden können. Damit kann eine Leckage zwischen Gleitring und Ventilglied verhindert werden.

Der Gleitring weist Polyvinylidenfluorid (PVDF) und/oder Polytetrafluorethylen (PTFE) auf. Weiter weist der Stützring einen der Kunststoffe Polyphenylensulfid (PPS), Polyphthalamid (PPA), Polyamid (PA) oder Duroplast auf. Mittels dieser Materialien ist der Hybrid-Dichtring ausreichend steif, dichtet gut gegenüber einem Ventilglied ab, und taucht bei einer Stellung des Hybrid-Dichtrings ganz oder teilweise über einer Öffnung des Ventilglieds kaum in die Öffnung ein.

Gemäß einem Ausführungsbeispiel des Hybrid-Dichtrings ist der Gleitring weicher als der Stützring ausgebildet. Insbesondere weist der Gleitring auch eine größere Elastizität als der Stützring auf.

Gemäß einem weiteren Ausführungsbeispiel des Hybrid-Dichtrings sind der Stützring und der Gleitring rotationssymmetrisch relativ zu einer Achse ausgebildet. Dadurch können der Stützring und der Gleitring gut dichtend miteinander verbunden werden. Alternativ können der Stützring und/oder der Gleitring aber auch eine geometrische Form aufweisen, welche nicht rotationssymmetrisch ist.

Es liegt im Rahmen der Erfindung, dass der Stützring und der Gleitring bezogen auf die Achse in radialer Richtung gegeneinander abgedichtet sind oder bezogen auf die Achse in axialer Richtung gegeneinander abgedichtet sind. Auf jeden Fall sind der Stützring und der Gleitring an zumindest einer Stelle gegeneinander abgedichtet, so dass kein Kühlmittel zwischen Stützring und Gleitring hindurchströmen kann.

Vorteilhafterweise ist der Hybrid-Dichtring so ausgebildet, dass der Stützring und der Gleitring dichtend miteinander verbunden sind. Dies kann erreicht werden indem der Stützring und der Gleitring zusammengeclipst, zusammengesteckt und/oder zusammengeklebt sind oder indem der Hybrid-Dichtring in Zwei-Komponenten-Spritzguss-Bauweise ausgeführt ist.

Wenn der Stützring und der Gleitring zusammengeclipst sind, dann bildet sich ein Hinterschnitt aus, so dass der Stützring und der Gleitring nicht mehr einfach auseinanderfallen können.

Ebenfalls lässt sich auch das Zusammenstecken des Stützrings und des Gleitrings einfach bewerkstelligen, da der Stützring und der Gleitring hier einfach aufeinandergepresst sind.

Mit dem Zusammenkleben des Stützrings und des Gleitrings wird eine absolut dichte Verbindung geschaffen.

Den Hybrid-Dichtring in der Zwei-Komponenten-Spritzguss-Bauweise auszubilden, schafft eine besonders feste Verbindung zwischen dem Stützring und dem Gleitring. Allerdings stehen bei der Zwei-Komponenten-Spritzguss-Bauweise nicht alle Materialkombinationen für den Stützring und den Gleitring zur Verfügung.

In einer Weiterbildung des Hybrid-Dichtrings ist zwischen dem Stützring und dem Gleitring ein Elastomerring angeordnet. Der Elastomerring dient zum Abdichten des Spalts zwischen dem Stützring und dem Gleitring.

Vorteilhafterweise kann der Stützring einen Abdichtsteg und der Gleitring eine Ausnehmung aufweisen, wobei der Abdichtsteg in die Ausnehmung eingreift, um den Stützring gegen den Gleitring abzudichten.

Alternativ kann der Gleitring einen Abdichtsteg und der Stützring eine Ausnehmung aufweisen, wobei der Abdichtsteg in die Ausnehmung eingreift, um den Gleitring gegen den Stützring abzudichten.

Mittels des Abdichtstegs kann zuverlässig an zumindest einer Stelle eine Abdichtung zwischen dem Stützring und dem Gleitring erfolgen.

Vorzugsweise umhüllt der Gleitring den Stützring. Das Material des Gleitrings, beispielsweise Polyvinylidenfluorid (PVDF), kann bei einer Temperaturerhöhung schwinden. Dementsprechend kann der Gleitring bei einer Temperaturerhöhung spaltfrei auf den Stützring aufgeschrumpft werden, wenn der Gleitring den Stützring umhüllt.

Unter "der Gleitring umhüllt den Stützring" ist zu verstehen, dass der Gleitring den Stützring in einem geschlossenen Ring umhüllt. Der Ring ist also nicht unterbrochen. Dagegen braucht nicht die gesamte äußere Mantelfläche des Stützrings von dem Gleitring bedeckt zu sein.

Alternativ kann auch der Stützring den Gleitring umhüllen.

Weiter wird eine Dichtungsanordnung mit einem Hybrid-Dichtring beschrieben.

Die für den vorgeschlagenen Hybrid-Dichtring beschriebenen Ausführungsformen und Merkmale gelten für die vorgeschlagene Dichtungsanordnung entsprechend und umgekehrt.

Weitere mögliche Implementierungen der Erfindung umfassen auch nicht explizit genannte Kombinationen von zuvor oder im Folgenden beschriebenen Merkmalen. Dabei wird der Fachmann auch Einzelaspekte als Verbesserungen oder Ergänzungen zu der jeweiligen Grundform der Erfindung hinzufügen.

Weitere Vorteile und vorteilhafte Ausführungsformen und Weiterbildungen der Erfindung werden anhand der nachfolgenden Beschreibung unter Bezugnahme auf die Figuren dargestellt. Diese zeigen in
- Fig. 1: eine perspektivische teilweise Ansicht einer Dichtungsanordnung mit einem Hybrid-Dichtring,
- Fig. 2: eine perspektivische teilweise Ansicht einer weiteren Dichtungsanordnung mit einem Hybrid-Dichtring,
- Fig. 3: eine perspektivische teilweise Ansicht eines Hybrid-Dichtrings,
- Fig. 4a: eine Schnittansicht eines Hybrid-Dichtrings mit axialer Abdichtung,
- Fig. 4b: eine Schnittansicht eines Hybrid-Dichtrings mit radialer Abdichtung,
- Fig. 5a: eine Schnittansicht eines Hybrid-Dichtrings mit einem zusätzlichen Elastomerring,
- Fig. 5b: eine weitere Schnittansicht eines Hybrid-Dichtrings mit einem zusätzlichen Elastomerring,
- Fig. 6: eine Schnittansicht eines Hybrid-Dichtrings, bei welchem der Stützring und der Gleitring verclipst sind,
- Fig. 7: drei Schnittansichten von drei Hybrid-Dichtringen, bei welchen Abdichtstege an unterschiedlichen Stellen positioniert sind.

In den Figuren sind gleiche oder funktionsgleiche Elemente mit denselben Bezugszeichen versehen worden. Ferner sollte beachtet werden, dass die Darstellungen in den Figuren nicht notwendigerweise maßstabsgerecht sind.

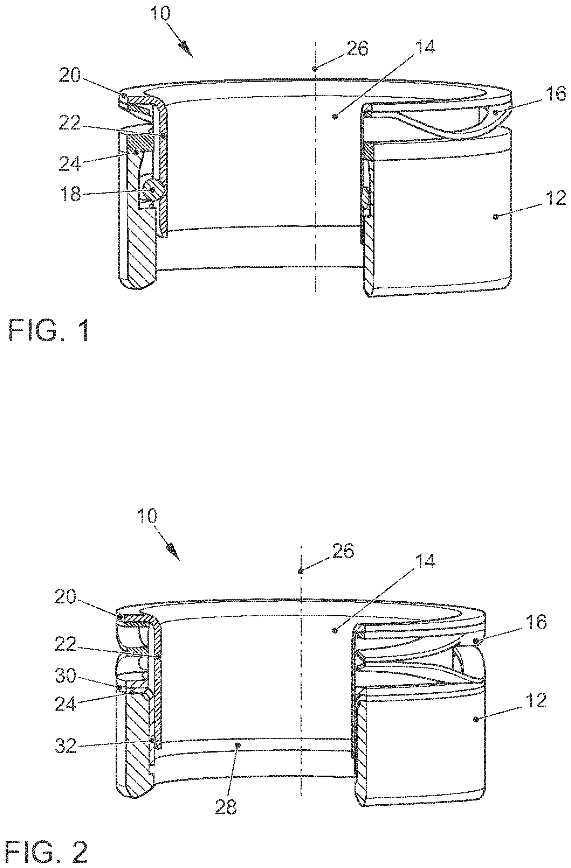

Fig. 1 zeigt eine perspektivische Ansicht einer Dichtungsanordnung 10. Allerdings fehlt ein Teilbereich der Dichtungsanordnung 10. Die Dichtungsanordnung 10 weist einen Hybrid-Dichtring 12, eine Dichthülse 14, eine Druckfeder 16 und einen Elastomerring 18 auf. Die Dichthülse 14 dient zum Abdichten gegenüber einem Fluidkanal. Dagegen dient der Hybrid-Dichtring 12 zum Abdichten gegenüber einem Ventilglied.

Die Dichthülse 14 umfasst einen Flansch 20 und einen Rohrabschnitt 22. Weiter weist die Dichthülse 14 insbesondere Metall auf. Die Druckfeder 16 ist zwischen dem Flansch 20 und einer Stirnseite 24 des Hybrid-Dichtrings 12 angeordnet. Mittels der Druckfeder 16 werden die Dichthülse 14 und der Hybrid-Dichtring 12 entlang der Achse 26 auseinandergedrückt, so dass die Dichthülse 14 gegen ein Ende des Fluidkanals und der Hybrid-Dichtring gegen das Ventilglied gepresst werden.

Der Elastomerring 18 dichtet den Hybrid-Dichtring 12 und die Dichthülse 14 gegeneinander ab. Demnach kann kein Kühlmittel zwischen dem Hybrid-Dichtring 12 und der Dichthülse 14 hindurchströmen.

Fig. 2 zeigt eine perspektivische Ansicht einer weiteren Dichtungsanordnung 10 mit einem Hybrid-Dichtring 12, wobei ein Teilbereich der Dichtungsanordnung 10 fehlt. Im Gegensatz zu der in der Fig. 1 dargestellten Dichtungsanordnung 10, weist die in der Fig. 2 dargestellte Dichtungsanordnung 10 keinen Elastomerring zwischen der Dichthülse 14 und dem Hybrid-Dichtring 12 auf. Dafür ist eine weitere Dichthülse 28 vorgesehen.

Die weitere Dichthülse 28 weist insbesondere Metall auf und ist mit dem Hybrid-Dichtring 12 dichtend verbunden. Insbesondere sind die weitere Dichthülse 28 und der Hybrid-Dichtring 12 auch fest miteinander verbunden. Die weitere Dichthülse 28 weist einen Flansch 30 und einen Rohrabschnitt 32 auf.

Der Flansch 30 der weiteren Dichthülse 28 ist zwischen der Druckfeder 16 und der Stirnseite 24 des Hybrid-Dichtrings 12 angeordnet. Die Dichthülse 14 und die weitere Dichthülse 28 sind gegeneinander in Richtung der Achse 26 verschiebbar. Dabei sind die Dichthülse 14 und die Dichthülse 28 so ausgebildet, dass sie gegeneinander abdichten. Dementsprechend kann kein Kühlmittel zwischen der Dichthülse 14 und der weitern Dichthülse 28 hindurchströmen.

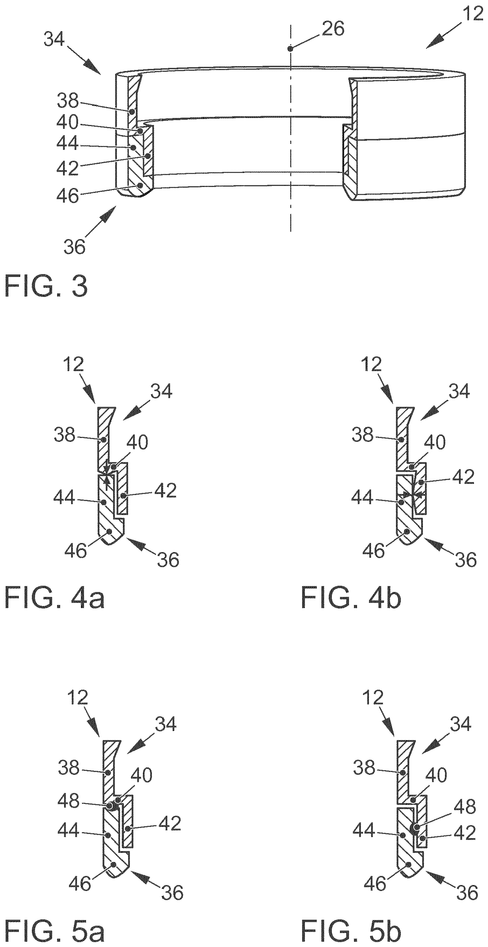

Fig. 3 zeigt eine perspektivische Ansicht eines Hybrid-Dichtrings 12 für z.B. eine Dichtungsanordnung 10 nach Fig. 1 oder 2. Dabei fehlt bei dem in der Fig. 3 dargestellten Hybrid-Dichtring 12 ein Teilbereich. Der Hybrid-Dichtring 12 weist einen Stützring 34 und einen Gleitring 36 auf. Der Stützring 34 dient zur mechanischen Stabilisierung des Hybrid-Dichtrings 12. Dagegen dient der Gleitring 36 zum Gleiten auf einem Ventilglied und zum Abdichten gegenüber dem Ventilglied. Dabei sind der Stützring 34 und der Gleitring 36 dichtend miteinander verbunden, so dass kein Kühlmittel zwischen dem Stützring 34 und dem Gleitring 36 hindurchströmen kann.

Der Hybrid-Dichtring 12 ist zweiteilig, d.h. aufweisend den Stützring 34 und den Gleitring 36, ausgeführt, damit der Hybrid-Dichtring 12 erstens mögliche Fehlstellen des Ventilglieds kompensiert und zweitens nicht in den offenen Bereich des Ventilglieds einsackt. Der Gleitring 36 steht in Kontakt mit dem Ventilglied. Um die Fehlstellen auf der Mantelfläche des Ventilglieds auszugleichen und um wenig Reibung zu verursachen ist der Gleitring 36 aus einem entsprechenden weichen, elastischen und/oder tribologisch optimierten Material ausgebildet. In Frage kommt hierfür ein geeigneter Kunststoff. Der Gleitring 36 weist Polyvinylidenfluorid (PVDF) und/oder Polytetrafluorethylen (PTFE) auf.

Der Stützring 34 weist dagegen ein steifes Material auf. Bei dem Material handelt es sich um einen steifen Kunststoff, und zwar Polyphenylensulfid (PPS), Polyphthalamid (PPA), Polyamid (PA) und/oder Duroplast. Dabei können geeignete Füllstoffe, wie beispielsweise Glasfasern und/oder Kohlenstofffasern, eingesetzt werden. Der Stützring 34 erhöht die Struktursteifigkeit des Hybrid-Dichtrings 12 und unterbindet ein Einsacken des Hybrid-Dichtrings 12 in den offenen Bereich des Ventilglieds. Weiter nimmt der Stützring 34 angrenzende Bauteile der Dichtungsanordnung 10 und/oder deren Kräfte auf.

Das bevorzugte Material für den Gleitring 36 ist PVDF, da dieses kostengünstiger als PTFE ist. Der Stützring 34 ist bevorzugt aus glasgefülltem PPS, d.h. als Füllstoff werden bevorzugt Glasfasern eingesetzt. Das PPS ist ausreichend steif, kühlmittelbeständig und gegenüber Metall günstig herstellbar. Prinzipiell wird der Gleitring 36 immer weicher als der Stützring 34 sein.

Da der Hybrid-Dichtring 12 kaum in den freien Bereich, d.h. die Öffnung, des Ventilglieds einsackt, neigt er nicht zu einer dichtheitsbeeinflussenden Verformung. Dadurch kann der Hybrid-Dichtring 12 auch über einen längeren Zeitraum (z.B. bei abgeschaltetem Motor) über dem offenen Bereich des Ventilglieds verweilen. Diese Abstellposition wird wiederum angestrebt, um bei einem Systemausfall einen ausreichend großen Kühlmittelstrom zum Kühler gewährleisten zu können.

Wie in der Fig. 3 dargestellt, ist sowohl der Stützring 34 als auch der Gleitring 36 rotationssymmetrisch zur selben Achse 26 ausgebildet. Alternativ könnten der Stützring 34 und der Gleitring 36 auch nicht rotationssymmetrisch ausgebildet sein.

Der in Fig. 3 dargestellte Stützring 34 weist einen ersten Stützringabschnitt 38, einen zweiten Stützringabschnitt 40 und einen dritten Stützringabschnitt 42 auf. Dabei sind der erste Stützringabschnitt 38 und der dritte Stützringabschnitt 42 parallel zur Achse 26 ausgerichtet. Der zweite Stützringabschnitt 40 ist dagegen senkrecht zur Achse 26 ausgerichtet. Im Gegensatz dazu weist der in Fig. 3 dargestellte Gleitring 36 lediglich einen ersten Gleitringabschnitt 44 und einen zweiten Gleitringabschnitt 46 auf. Dabei ist der erste Gleitringabschnitt 44 parallel zur Achse 26 ausgebildet. Der zweite Gleitringabschnitt 46 ist in Richtung der Achse 26 näher an dem abzudichtenden Ventilglied angeordnet als der erste Gleitringabschnitt 44.

Wie in Fig. 3 zu sehen ist, umhüllt der Gleitring 36 den Stützring 34. Demnach ist eine mittels dem ersten Gleitringabschnitt 44 und dem zweiten Gleitringabschnitt 46 gebildete Innenfläche des Gleitrings 36 mit einer mittels dem zweiten Stützringabschnitt 40 und dem dritten Stützringabschnitt 42 gebildete Außenfläche des Stützrings 34 dichtend verbunden. Vorteilhafterweise ist der Gleitring 36 aus einem Material gefertigt, welches bei einer Temperaturerhöhung schrumpft. Dann kann der Gleitring 36 auf den Stützring 34 aufgeschrumpft werden.

Alternativ kann auch der Stützring 34 den Gleitring 36 umhüllen.

Fig. 4a zeigt eine Schnittansicht eines Hybrid-Dichtrings 12 mit axialer Abdichtung. Die Abdichtung erfolgt, wie die beiden Pfeile in Fig. 4a andeuten, zwischen der Außenfläche des zweiten Stützringabschnitts 40 und der Stirnfläche des ersten Gleitringabschnitts 44.

Fig. 4b zeigt eine Schnittansicht eines Hybrid-Dichtrings 12 mit radialer Abdichtung. Die Abdichtung erfolgt, wie die beiden Pfeile der Fig. 4b andeuten, zwischen der Innenfläche des erste Gleitringabschnitts 44 und der Außenfläche des dritten Stützringabschnitts 42.

Fig. 5a zeigt eine Schnittansicht eines Hybrid-Dichtrings 12 mit einem zusätzlichen optionalen Elastomerring 48. Der Elastomerring 48 dient zum Abdichten zwischen dem Stützring 34 und dem Gleitring 36. Dabei ist der Elastomerring 48 zwischen der Außenfläche des zweiten Stützringabschnitts 40 und der Stirnfläche des ersten Gleitringabschnitts 44 angeordnet.

Fig. 5b zeigt eine weitere Schnittansicht eines Hybrid-Dichtrings 12 mit einem zusätzlichen optionalen Elastomerring 48. Hier ist der Elastomerring 48 zwischen der Innenfläche des erste Gleitringabschnitts 44 und der Außenfläche des dritten Stützringabschnitts 42 angeordnet.

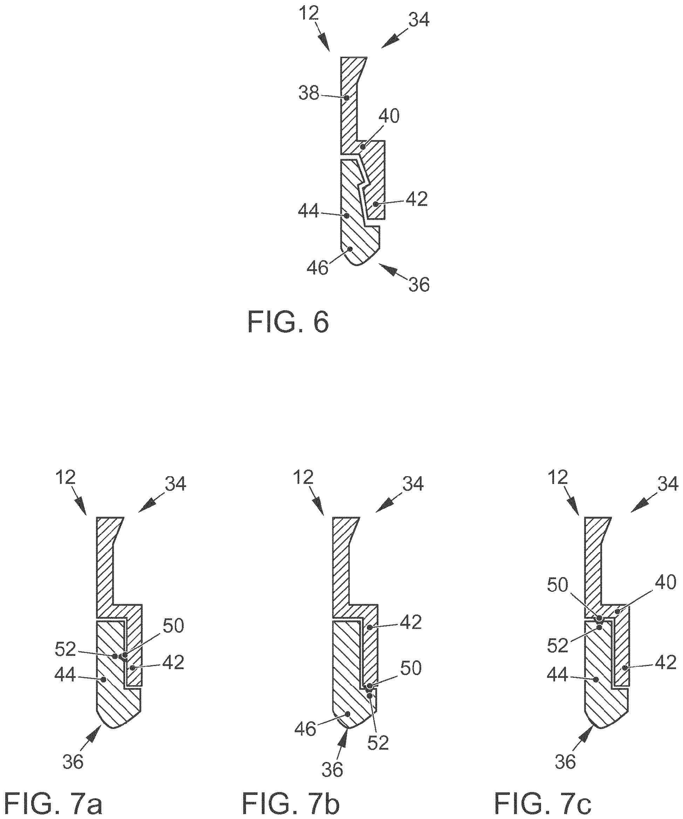

Fig. 6 zeigt eine Schnittansicht eines Hybrid-Dichtrings 12, bei welchem der Stützring 34 und der Gleitring 36 verclipst sind. Dazu sind die Innenfläche des ersten Gleitringabschnitts 44 und die Außenfläche des dritten Stützringabschnitts 42 entsprechend ausgebildet, um zusammengeclipst werden zu können. Dabei bilden der erste Gleitringabschnitt 44 und der dritte Stützringabschnitt 42 entsprechende Zapfen und Ausnehmungen aus, so dass sich zumindest ein Hinterschnitt ausbildet. Dementsprechend unterbindet die Clipverbindung ein Auseinanderfallen des Hybrid-Dichtrings 12.

Alternativ können der Stützring 34 und der Gleitring 36 auch zusammengesteckt und/oder zusammengeklebt werden. Weiter ist es auch möglich den Stützring 34 und den Gleitring 36 in einer Zwei-Komponenten-Spritzguss-Bauweise auszuführen.

Die Fig. 7a, 7b, 7c zeigen drei Schnittansichten von drei Hybrid-Dichtringen 12, bei welchen Abdichtstege 50 an unterschiedlichen Stellen positioniert sind. Die Abdichtstege 50 dienen zum Abdichten zwischen dem Stützring 34 und dem Gleitring 36 und greifen dazu in entsprechende Ausnehmungen 52 ein.

Fig. 7a zeigt einen Hybrid-Dichtring 12 mit einem Abdichtsteg 50, welcher fest mit dem dritten Stützringabschnitt 42 verbunden ist. Der Abdichtsteg 50 greift in eine Ausnehmung 52 an der Innenseite des ersten Gleitringabschnitts 44 ein. Dagegen weist der Hybrid-Dichtring 12 der Fig. 7b den Abdichtsteg 50 an einem Stirnende des dritten Stützringabschnitts 42 auf. Entsprechend ist die Ausnehmung 52 im zweiten Gleitringabschnitt 46 vorgesehen. Bei dem in der Fig. 7c gezeigten Hybrid-Dichtring 12 ist der Abdichtsteg 50 an dem zweiten Stützringabschnitt 40 angeordnet. Entsprechend ist die Ausnehmung 52 an der Stirnseite des ersten Gleitringabschnitts 44 vorgesehen.

Alternativ ist es ebenfalls möglich, den Abdichtsteg irgendwo an einer dem Stützring 34 zugewandten Seite des Gleitrings 36 vorzusehen und die Ausnehmung an entsprechender Position an dem Stützring 34 vorzusehen. Dementsprechend ist der Abdichtsteg dann fest mit dem Gleitring 36 verbunden.

### BEZUGSZEICHENLISTE

- 10: Dichtungsanordnung
- 12: Hybrid-Dichtring
- 14: Dichthülse
- 16: Druckfeder
- 18: Elastomerring
- 20: Flansch der Dichthülse
- 22: Rohrabschnitt der Dichthülse
- 24: Stirnseite des Hybrid-Dichtrings
- 26: Achse
- 28: weitere Dichthülse
- 30: Flansch der weiteren Dichthülse
- 32: Rohrabschnitt der weiteren Dichthülse
- 34: Stützring
- 36: Gleitring
- 38: erster Stützringabschnitt
- 40: zweiter Stützringabschnitt
- 42: dritter Stützringabschnitt
- 44: erster Gleitringabschnitt
- 46: zweiter Gleitringabschnitt
- 48: Elastomerring
- 50: Abdichtsteg
- 52: Ausnehmung

## Patentansprüche

1. Hybrid-Dichtring (12) für eine Dichtungsanordnung (10), aufweisend
einen Stützring (34) zum mechanischen Stabilisieren des Hybrid-Dichtrings (12), und
einen Gleitring (36) zum Gleiten auf einem Ventilglied,
wobei der Stützring (34) und der Gleitring (36) dichtend miteinander verbunden sind,
**dadurch gekennzeichnet, dass** der Gleitring (36) Polyvinylidenfluorid (PVDF) und/oder Polytetrafluorethylen (PTFE) aufweist und dass der Stützring (34) einen der Kunststoffe Polyphenylensulfid (PPS), Polyphthalamid (PPA), Polyamid (PA) oder Duroplast aufweist.

2. Hybrid-Dichtring nach Anspruch 1, **dadurch gekennzeichnet, dass** der Gleitring (36) weicher als der Stützring (34) ausgebildet ist.

3. Hybrid-Dichtring nach Anspruch 1 oder 2, **dadurch gekennzeichnet, dass** der Stützring (34) und der Gleitring (36) rotationssymmetrisch relativ zu einer Achse (26) ausgebildet sind.

4. Hybrid-Dichtring nach Anspruch 3, **dadurch gekennzeichnet, dass** der Stützring (34) und der Gleitring (36) bezogen auf die Achse (26) in radialer Richtung gegeneinander abgedichtet sind oder bezogen auf die Achse (26) in axialer Richtung gegeneinander abgedichtet sind.

5. Hybrid-Dichtring nach einem der vorhergehenden Ansprüche, **dadurch gekennzeichnet, dass** der Stützring (34) und der Gleitring (36) dichtend miteinander verbunden sind, indem sie zusammengeclipst, zusammengesteckt, zusammengeklebt oder in Zwei-Komponenten-Spritzguss-Bauweise ausgeführt sind.

6. Hybrid-Dichtring nach einem der vorhergehenden Ansprüche, **dadurch gekennzeichnet, dass** zwischen dem Stützring (34) und dem Gleitring (36) ein Elastomerring (48) angeordnet ist.

7. Hybrid-Dichtring nach einem der vorhergehenden Ansprüche, **dadurch gekennzeichnet, dass** der Stützring (34) einen Abdichtsteg (50) und der Gleitring (36) eine Ausnehmung (52) aufweist, wobei der Abdichtsteg (50) in die Ausnehmung (52) eingreift, um den Stützring (34) gegen den Gleitring (36) abzudichten, oder dass der Gleitring (36) einen Abdichtsteg und der Stützring (34) eine Ausnehmung aufweist, wobei der Abdichtsteg in die Ausnehmung eingreift, um den Gleitring (36) gegen den Stützring (34) abzudichten.

8. Hybrid-Dichtring nach einem der vorhergehenden Ansprüche, **dadurch gekennzeichnet, dass** der Gleitring (36) den Stützring (34) umhüllt oder dass der Stützring (34) den Gleitring (36) umhüllt.

9. Dichtungsanordnung (10) mit einem Hybrid-Dichtring (12) nach einem der vorhergehenden Ansprüche.

## Claims

1. Hybrid sealing ring (12) for a sealing arrangement (10), comprising
a support ring (34) for mechanically stabilizing the hybrid sealing ring (12), and
a slide ring (36) for sliding on a valve member,
the support ring (34) and the slide ring (36) being sealingly interconnected,
**characterized in that** the slide ring (36) comprises polyvinylidene fluoride (PVDF) and/or polytetrafluoroethylene (PTFE), and **in that** the support ring (34) comprises one of the plastics polyphenylene sulfide (PPS), polyphthalamide (PPA), polyamide (PA) or a thermoset.

2. Hybrid sealing ring according to claim 1, **characterized in that** the slide ring (36) is more flexible than the support ring (34).

3. Hybrid sealing ring according to claim 1 or 2, **characterized in that** the support ring (34) and the slide ring (36) are rotationally symmetrical relative to an axis (26).

4. Hybrid sealing ring according to claim 3, **characterized in that** the support ring (34) and the slide ring (36) are sealed off from each other in the radial direction with respect to the axis (26) or are sealed off from each other in the axial direction with respect to the axis (26).

5. Hybrid sealing ring according to any of the preceding claims,
**characterized in that** the support ring (34) and the slide ring (36) are sealingly interconnected by being clipped together, plugged together, glued together or being in a two-component injection-molded construction.

6. Hybrid sealing ring according to any of the preceding claims,
**characterized in that** an elastomer ring (48) is arranged between the support ring (34) and the slide ring (36).

7. Hybrid sealing ring according to any of the preceding claims,
**characterized in that** the support ring (34) has a sealing strip (50) and the slide ring (36) has a recess (52), wherein the sealing strip (50) engages in the recess (52) in order to seal the support ring (34) off from the slide ring (36), or **in that** the slide ring (36) has a sealing strip and the support ring (34) has a recess, wherein the sealing strip engages in the recess in order to seal the slide ring (36) off from the support ring (34).

8. Hybrid sealing ring according to any of the preceding claims,
**characterized in that** the slide ring (36) surrounds the support ring (34) or **in that** the support ring (34) surrounds the slide ring (36).

9. Sealing arrangement (10) comprising a hybrid sealing ring (12) according to any of the preceding claims.

## Revendications

1. Bague d'étanchéité hybride (12) pour un agencement d'étanchéité (10), présentant
une bague de protection (34) pour la stabilisation mécanique de la bague d'étanchéité hybride (12), et
une bague de glissement (36) pour glisser sur un organe de soupape,
dans laquelle la bague d'étanchéité (34) et la bague de glissement (36) sont raccordées l'une à l'autre de manière étanche,
**caractérisée en ce que** la bague de glissement (36) présente du polyfluorure de vinylidène (PVDF) et/ou du polytétrafluoroéthylène (PTFE) et **en ce que** la bague de protection (34) présente une des matières plastiques polyphénylène sulfure (PPS), polyphthalamide (PPA), polyamide (PA) ou plastique thermodurcissable.

2. Bague d'étanchéité hybride selon la revendication 1, **caractérisée en ce que** la bague de glissement (36) est réalisée plus souple que la bague de protection (34).

3. Bague d'étanchéité hybride selon la revendication 1 ou 2,
**caractérisée en ce que** la bague de protection (34) et la bague de glissement (36) sont réalisées symétriques en rotation par rapport à un axe (26).

4. Bague d'étanchéité hybride selon la revendication 3, **caractérisée en ce que** la bague d'étanchéité (34) et la bague de glissement (36) sont scellées l'une par rapport à l'autre dans la direction radiale par rapport à l'axe (26) ou sont scellées l'une par rapport à l'autre dans la direction axiale par rapport à l'axe (26).

5. Bague d'étanchéité hybride selon l'une quelconque des revendications précédentes, **caractérisée en ce que** la bague de protection (34) et la bague de glissement (36) sont raccordées l'une à l'autre de manière étanche, **en ce qu'**elles sont clipsées ensemble, assemblées, collées ensemble ou réalisées selon une conception à deux composants moulés par injection.

6. Bague d'étanchéité hybride selon l'une quelconque des revendications précédentes, **caractérisée en ce qu'**une bague en élastomère (48) est agencée entre la bague de protection (34) et la bague de glissement (36).

7. Bague d'étanchéité hybride selon l'une quelconque des revendications précédentes, **caractérisée en ce que** la bague de protection (34) présente une barrette d'étanchéité (50) et la bague de glissement (36) une cavité (52), la barrette d'étanchéité (50) venant en prise dans la cavité (52), afin de sceller la bague de protection (34) par rapport à la bague de glissement (36) ou **en ce que** la bague de glissement (36) présente une barrette d'étanchéité et la bague de protection (34) une cavité, la barrette d'étanchéité venant en prise dans la cavité afin de sceller la bague de glissement (36) par rapport à la bague de protection (34).

8. Bague d'étanchéité hybride selon l'une quelconque des revendications précédentes, **caractérisée en ce que** la bague de glissement (36) enveloppe la bague de protection (34) ou **en ce que** la bague de protection (34) enveloppe la bague de glissement (36).

9. Agencement d'étanchéité (10) comportant une bague d'étanchéité hybride (12) selon l'une quelconque des revendications précédentes.
